# EUROPEAN PATENT APPLICATION

(11) **EP 1 835 212 A1**
(43) Date of publication of application: **19.09.2007**
(21) Application number: 05816797.4
(22) Date of filing: 13.12.2005
(51) Int. Cl.: F16K 27/00, B60H 1/32, F04B 27/14, F04B 39/14, F16K 31/06, F25B 41/06

(54) **MOUNTING STRUCTURE OF CONTROL VALVE**

(30) Priority: 07.01.2005 JP 2005002170
(71) Applicant: TGK COMPANY, LTD., Tokyo 193-0942 (JP)
(72) Inventor: HIROTA, Hisatoshi, TGK CO., LTD., Hachioji-shi, Tokyo 1930942 (JP)
(74) Representative: Grünecker, Kinkeldey, Stockmair & Schwanhäusser Anwaltssozietät
(86) International application number: PCT/JP2005/022844
(87) International publication number: WO 2006/073043

(57) **Abstract**

To enable a control valve to be easily mounted, not by bolt fastening.

A thread portion (22) is formed in a mounting hole (21) of a compressor (1), in which a control valve (7) is to be mounted, and as for the control valve (7) as well, a thread portion (23) mating with the thread portion (22) in the mounting hole (21) is threadedly formed on a yoke surrounding a coil of a solenoid of the control valve (7). A gasket (24) is disposed between a flange portion of the control valve (7), formed in a manner opposed to a stepped portion inside the mounting hole (21), and the stepped portion inside the mounting hole (21). The yoke is provided in a manner pivotally movable with respect to the flange portion having the gasket (24) disposed thereon, and is configured to be brought into contact with the flange portion in a direction of insertion of the control valve (7). By screwing the yoke into the thread portion(22) of the mounting hole (21), the flange portion presses the gasket 24 without being rotated, thereby sealing the stepped portion, and simultaneously completing the mounting of the control valve (7)

## Description

### Technical Field

This invention relates to a mounting structure for a control valve, and more particularly to a mounting structure for a control valve for use in controlling a compressor and a control valve for use as an expansion device, as a component of a refrigeration cycle for an automotive air conditioning system.

### Background Art

In an automotive air conditioning system, a refrigeration cycle comprises a compressor for compressing refrigerant circulating through the refrigeration cycle, a condenser for condensing the high-temperature, high-pressure refrigerant compressed by the compressor, an expansion device for adiabatically expanding the condensed refrigerant, an evaporator for evaporating the expanded low-temperature, low-pressure refrigerant, and an accumulator disposed on an outlet side of the evaporator, for storing surplus refrigerant in the refrigeration cycle to separate the same into a gas and a liquid.

The compressor driven for rotation by an engine is incapable of controlling the rotational speed thereof, and therefore a variable displacement type compressor is employed which is capable of controlling the displacement of the compressor for discharging refrigerant to be constant irrespective of the rotational speed of the engine. In the variable displacement compressor, a wobble plate, which is fitted on a rotating shaft driven for rotation by the engine, has compression pistons connected thereto, and by varying the inclination angle of the wobble plate with respect to the rotating shaft, the stroke of the pistons is varied to vary the discharge amount of refrigerant, that is, the displacement of the compressor. The inclination angle of the wobble plate can be continuously changed by changing pressure in a crankcase, thereby changing the balance of pressures acting on the opposite end faces of each piston. The pressure in the crankcase can be varied by introducing e.g. part of the compressed refrigerant into the crankcase, and the amount of the introduced refrigerant is controlled by a control valve.

The control valve for the variable displacement compressor is mounted in the compressor by being inserted into a predetermined insertion hole formed in the compressor and having a snap ring fitted into the inner wall of the insertion hole so as to prevent the control valve from being removed from the insertion hole. When the control valve is mounted in the compressor, the inside thereof is connected to respective passages communicating with discharge chambers, the crankcase, and suction chambers. The passages are configured to be sealed from each other by rubber O rings, and further a passage disposed at a location near to an open end of the insertion hole is also configured to be sealed from the atmosphere by a rubber O ring (see e.g. Patent Literature 1).

As the expansion valve, there is generally used a thermostatic expansion valve mounted between the condenser and the evaporator, but an electromagnetic control valve is sometimes employed which is capable of freely controlling the flow rate of refrigerant by electric current externally supplied thereto. Such a control valve is connected to the condenser and the evaporator by inserting pipes communicating with them into a refrigerant inlet port and a refrigerant outlet port of a valve section thereof which directly controls the flow rate of refrigerant, respectively. In this case, junctures of the control valve are hermetically sealed e.g. by rubber O rings, and a solenoid section which controls the valve section is also sealed from the atmosphere by a rubber O ring (see e.g. Patent Literature 2).

By the way, in general, a substitute flon HFC-134a has been generally used as refrigerant for the automotive air conditioning system. However, attention has come to be paid to carbon dioxide, as refrigerant to be used in place of the substitute flon, based on needs for the prevention of global warming, and refrigeration cycles using carbon dioxide have been in practical use in other fields of the refrigeration cycle.

However, in a system using carbon dioxide as refrigerant, it is difficult to use rubber O rings which have been conveniently used for sealing component parts of the control valve. This is because rubber has characteristics of being very low in permeability with respect to the substitute flon but being high in same with respect to carbon dioxide. Therefore, particularly when rubber O rings are used for portions to be sealed from the atmosphere, carbon dioxide permeates the O rings to leak from the refrigeration cycle.

On the other hand, a metal sealing method is known in which metals are brought into intimate contact with each other for sealing, instead of using the O rings.
Patent Literature 1: Japanese Unexamined Patent Publication No. 2004-11454 (FIGS. 1 and 4)
Patent Literature 2: Japanese Unexamined Patent Publication No. 2003-156268 (FIG. 2)

### Disclosure of the Invention

### Problems that the Invention is to Solve

In the metal sealing method, however, it is necessary to press the metals against each other to bring them into intimate contact with each other. Therefore, a flange is formed on the control valve, and the flange is fastened by bolts to a member on which the control valve is mounted so as to press the sealed portion. Due to the structure thereof, the flange portion is formed on the control valve in a manner protruding therefrom, and hence forms an obstacle to handling of the control valve.

The present invention has been made in view of the above problems, and an object thereof is to provide a mounting structure for a control valve, which enables the control valve to be mounted, not by bolt fastening.

### Means for Solving the Problems

To solve the above problem, the present invention provides a mounting structure for a control valve that is interposed in a refrigerant passage, thorough which refrigerant flows, in a refrigeration cycle for an automotive air conditioning system, for controlling a flow rate of refrigerant, wherein a mounting hole that has a stepped portion inside thereof which is opposed to a yoke surrounding a coil of a solenoid of the control valve in a direction of insertion of the control valve, and has a first thread portion in an inner portion toward an open end thereof, is provided at a location where the control valve is to be mounted, wherein the control valve is provided with a flange portion radially outwardly extended such that the flange portion is opposed to the stepped portion when the control valve is inserted, a gasket disposed on a surface of the flange portion, opposed to the stepped portion, and the yoke disposed outside a fixed core and a movable core of the solenoid such that the yoke can be pivotally moved about an axis of the fixed core and the movable core, with one end thereof in the direction of insertion of the control valve being capable of being brought into contact with a surface of the flange portion opposite to the surface having the gasket disposed thereon, and the other end thereof having a second thread portion for mating with the first thread portion, and wherein the control valve is inserted into the insertion hole, and the yoke is screwed in, whereby the one end of the yoke presses the gasket against the stepped portion via the flange portion, thereby simultaneously achieving sealing of the stepped portion and mounting of the control valve.

According to this mounting structure for the control valve, the yoke is screwed in after the control valve is inserted into the insertion hole, whereby it is possible to press the gasket between the flange portion and the stepped portion without rotating the gasket, thereby making it possible to achieve sealing of the stepped portion and mounting of the control valve simultaneously in a single operation.

### Advantages of the Invention

In the mounting structure for the control valve according to the present invention, the gasket for sealing against the atmosphere is pressed not by bolt fastening but by screw-in of the yoke inherently included in the solenoid, whereby it becomes unnecessary to form a flange which has been only required for bolt fastening. As a result, the control valve no longer has a protruding portion formed thereon, which makes it possible to facilitate handling of the control valve.

The above and other objects, features and advantages of the present invention will become apparent from the following description when taken in conjunction with the accompanying drawings which illustrate preferred embodiments of the present invention by way of example.

### Brief Description of the Drawings

FIG. 1 is a view of a refrigeration cycle for an automotive air conditioning system.
FIG. 2 is a view of a control valve in a state mounted in the compressor.
FIG. 3 is a central longitudinal cross-sectional view showing an example of the construction of the control valve for the compressor.
FIG. 4 is a view of the control valve for the compressor as viewed from a direction in which the control valve is mounted.
FIG. 5 is a view of another control valve in a state mounted in the compressor.
FIG. 6 is a central longitudinal cross-sectional view showing an example of the construction of the control valve.
FIG. 7 is a view showing the control valve as viewed from a direction in which the control valve is mounted.
FIG. 8 is a view of a control valve as an expansion device, in a mounted state thereof.

### Best Mode for Carrying Out the Invention

Hereinafter, an embodiment of the present invention will be described in detail based on an example in which it is applied to a control valve serving as a control valve and an expansion valve of a compressor which is used in a refrigeration cycle for an automotive air conditioning system using carbon dioxide as refrigerant.

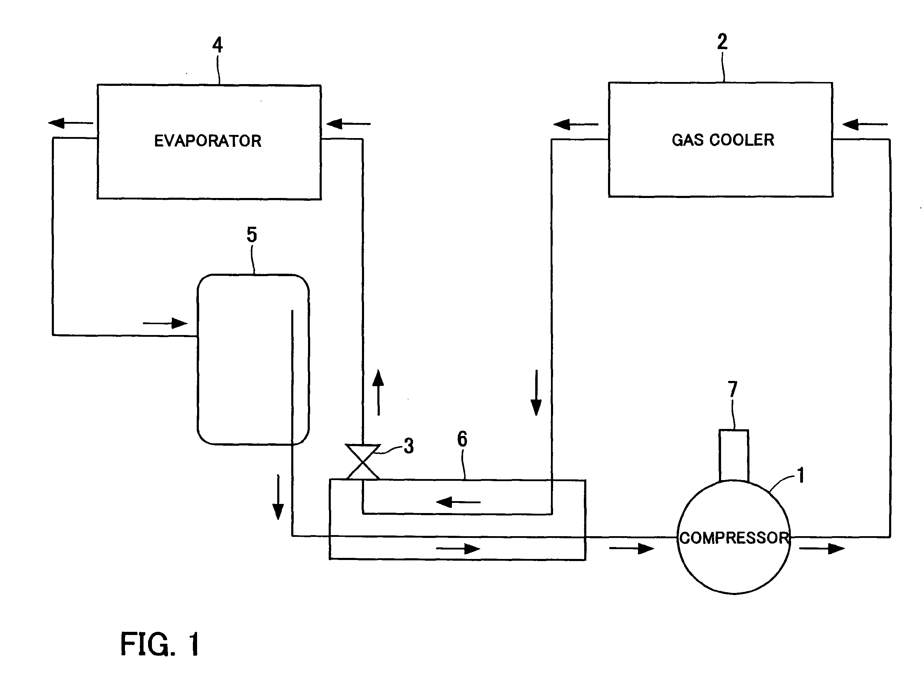

FIG. 1 is a view of the refrigeration cycle for an automotive air conditioning system.

The refrigeration cycle using carbon dioxide as refrigerant comprises a compressor 1 that compresses refrigerant circulating through the refrigeration cycle, a gas cooler 2 that cools the high-temperature, high-pressure refrigerant compressed by the compressor 1, a control valve 3 that adiabatically expands the cooled refrigerant, an evaporator 4 that evaporates the expanded low-temperature, low-pressure refrigerant, an accumulator 5 disposed on an outlet side of the evaporator 4, for storing surplus refrigerant in the refrigeration cycle to separate the same into a gas and a liquid, and an internal heat exchanger 6 that performs heat exchange between refrigerant flowing from the gas cooler 2 and refrigerant flowing from the accumulator 5. The compressor 1 has a control valve 7 mounted therein. In the present embodiment, the control valve 3 serving as an expansion device is mounted in the internal heat exchanger 6, and is configured to control the flow rate of refrigerant adiabatically expanded for supply to the evaporator 4 by electric current externally supplied thereto.

Basically, the operation of a refrigeration cycle using carbon dioxide as refrigerant is substantially the same as that of a refrigeration cycle using a substitute flon. More specifically, the compressor 1 draws gaseous-phase refrigerant produced through gas-liquid separation in the accumulator 5, and compresses the gaseous-phase refrigerant into high-temperature, high-pressure refrigerant in a gaseous phase or supercritical state, to discharge the same. The refrigerant discharged from the compressor 1 is cooled by the gas cooler 2 and then delivered to the control valve 3 via the internal heat exchanger 6. In the control valve 3, the introduced high-temperature, high-pressure refrigerant in the supercritical or liquid phase state is adiabatically expanded to have its phase state changed from the liquid phase state to a two-phase gas-liquid state, and is then delivered to the evaporator 4. In the evaporator 4, the refrigerant in the two-phase gas-liquid state is evaporated by air in a vehicle compartment. As the refrigerant is evaporated, it cools air in the vehicle compartment by depriving the air of latent heat of vaporization. The refrigerant evaporated in the evaporator 4 is delivered to the accumulator 5 and is temporarily stored therein. A gaseous-phase portion of the refrigerant stored in the accumulator 5 is returned to the compressor 1 via the internal heat exchanger 6. The internal heat exchanger 6 further cools the high-temperature refrigerant cooled in the gas cooler 2, by the low-temperature refrigerant delivered from the accumulator 5 to the compressor 1, or further heats the low-temperature refrigerant delivered from the accumulator 5 to the compressor 1, by the high-temperature refrigerant from the gas cooler 2. The control valve 7 for the compressor 1 senses e.g. a differential pressure between a discharge pressure Pd and a suction pressure Ps of refrigerant, and controls a pressure Pc in a crankcase of the compressor such that the differential pressure becomes equal to a predetermined differential pressure which is set by electric current externally supplied to the control valve 7.

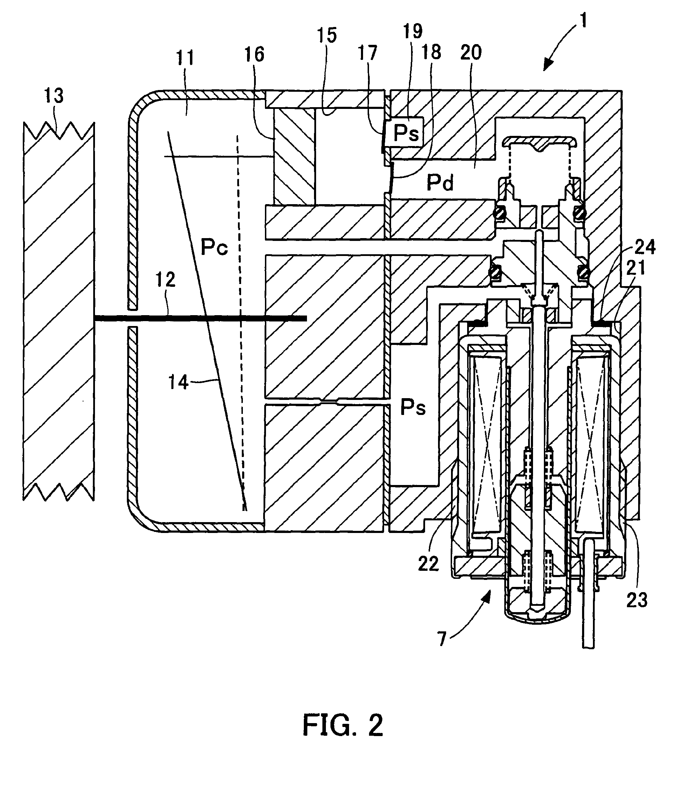

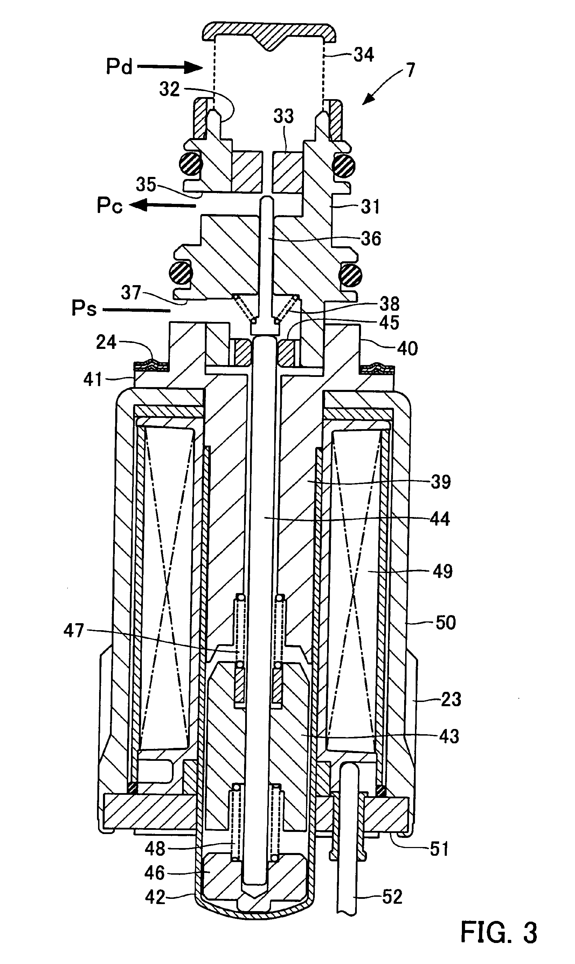

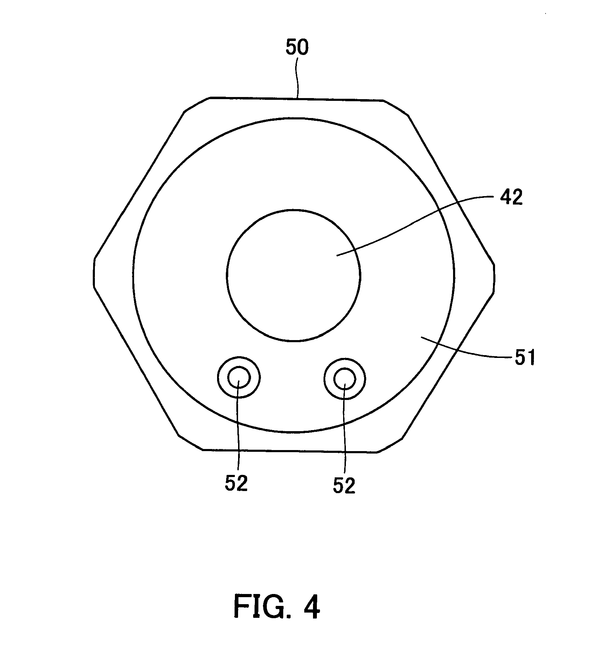

FIG. 2 is a view of the compressor in a state mounted in the control valve. FIG. 3 is a central longitudinal cross-sectional view showing an example of the construction of the control valve for the compressor. FIG. 4 is a view of the control valve for the compressor as viewed from a direction in which the control valve is mounted.

Referring to FIG. 2, the compressor 1 includes a hermetically formed crankcase 11, which contains a rotating shaft 12 rotatably supported therein. One end of the rotating shaft 12 extends via a sealed bearing device, not shown, to the outside of the crankcase 11, and a pulley 13 having a drive force transmitted from an output shaft of an engine via a belt is fixed to the one end of the rotating shaft 12. The rotating shaft 12 has a wobble plate 14 fitted thereon such that the inclination angle of the wobble plate 14 can be varied with respect to an axis of the rotating shaft 12. Around the axis of the rotating shaft 12, there are arranged a plurality of cylinders 15 (one of which is shown in FIG. 2). Each cylinder 15 has a piston 16 disposed therein, for converting the rotating motion of the wobble plate 14 into reciprocating motion. The cylinder 15 is connected to a suction chamber 19 and a discharge chamber 20 via a suction relief valve 17 and a discharge relieve valve 18, respectively. The suction chambers 19 of the respective cylinders 15 communicate with each other, thereby forming one chamber, and are connected to the internal heat exchanger 6. The discharge chambers 20 of the respective cylinders 15 also communicate with each other, thereby forming one chamber, and are connected to the gas cooler 2 of the refrigeration cycle.

Further, the compressor 1 has a mounting hole 21 for having the control valve 7 mounted therein, and a thread portion 22 is formed on an inner portion of the mounting hole 21 in the vicinity of an open end of the mounting hole 21. The control valve 7 is mounted in the compressor 1 by inserting the control valve 7 into the mounting hole 21 and screwing a thread portion 23 formed on an outer peripheral surface of the control valve 7 into the thread portion 22 of the mounting hole 21.

By mounting the control valve 7 in the compressor 1, internally, a refrigerant inlet port, a refrigerant outlet port, and a pressure-sensing section thereof for sensing the suction pressure Ps, of the control valve 7, are connected to passages communicating with the discharge chambers 20, the crankcase 11, and the suction chambers 19. Further, by screwing the control valve 7 into the mounting hole 21, a gasket 24 disposed between the pressure-sensing section for sensing suction pressure PS and the atmosphere is pressed, whereby the pressure-sensing section is hermetically sealed. It should be noted that although rubber O rings separate between the respective passages leading to the discharge chambers 20 and the crankcase 11, and between the respective passages leading to the crankcase 11 and the suction chambers 19, leakage of refrigerant caused by permeation at this portion is not significant enough to influence the control operation of the control valve 7, and hence can be ignored.

As shown in detail in FIG. 3, the control valve 7 has a body 31 of a valve section at an upper location as viewed in FIG. 3. The body 31 has an upper portion formed with a port 32 for introducing compressed refrigerant. A plug 33 forming a valve seat of the valve section is fitted in the inside of the port 32, while a strainer 34 fitted on the outside of the same in a manner capping the port 32. Further, the body 31 is formed with a port 35 on a side of the plug 33 opposite from the port 32, for supplying controlled refrigerant to the crankcase 11. On the same axis as that of the plug 33, a shaft 36 is held by the body 31 in a manner axially movable back and forth. A foremost end of the shaft 36, opposed to the plug 33, forms a valve element of the valve section. The shaft 36 has the other end thereof exposed to a space receiving the suction pressure Ps from the suction chamber via a port 37 formed in the body 31, and the shaft 36 is urged by a spring 38 in a direction away from the plug 33.

A solenoid is disposed at a lower end of the body 31. The solenoid has a fixed core 39, and a fitting portion 40 in which a lower end of the body 31 is fitted and a flange portion 41 radially outwardly extended are formed integrally with an upper end of the fixed core 39. The gasket 24 is disposed on the flange portion 41. The gasket 24, which is formed by a thin annular leaf spring, includes a ridge of circumferentially formed corrugated portion, and has opposite end faces thereof coated with rubber.

A bottomed sleeve 42 is fitted in a lower portion of the fixed core 39, and the rim of an opening of the bottomed sleeve 42 is hermetically fixed to the fixed core 39 by welding. The fixed core 39 and the bottomed sleeve 42 are made of the same material due to necessity of the welding. For example, the fixed core 39 is made of ferrite stainless steel, such as SUS 420 and SUS 430, and the bottomed sleeve 42 is made of non-magnetic stainless steel, such as SUS 304.

A movable core 43 is disposed within the bottomed sleeve 42, and is fixed to a shaft 44 disposed in a manner axially extending through the fixed core 39. The shaft 44 has opposite ends thereof axially slidably supported by a bearing member 45 provided in the body 31 and a bearing member 46 disposed in the bottomed sleeve 42. Springs 47 and 48 are arranged between the fixed core 39 and the movable core 43, and between the movable core 43 and bearing member 46, respectively.

A coil assembly that generates magnetism is loosely fitted on outer peripheries of the fixed core 39 and the bottomed sleeve 42 in a manner pivotally movable about the axis of the fixed core 39 and the bottomed sleeve 42. The coil assembly is formed by a coil 49, a yoke 50 surrounding the coil 49, and a plate 51 for forming a closed magnetic circuit together with the yoke 50, and a harness 52 for supplying electric current is connected to the coil 49.

The yoke 50 has an upper end radially inwardly extended, as viewed in FIG. 3, and has a cup-like shape with a hole formed in the center thereof. The radially inwardly extended portion of the yoke 50 is abutted by the flange portion 41 of the fixed core 39. Further, the yoke 50 has the thread portion 23 threadedly formed on the outer peripheral surface of a lower portion thereof, as viewed in FIG. 3. The outer periphery of a lower end of the yoke 50, as viewed in FIG. 3, is formed to be hexagonal, as shown in FIG. 4.

In mounting the control valve 7 configured as above in the compressor 1, first, the control valve 7 is inserted into the mounting hole 21 of the compressor 1. Then, the coil assembly of the control valve 7 is turned and screwed into the thread portion 22 of the mounting hole 21, and further screwed into the thread portion 22 by using a tool, such as a spanner. When the coil assembly is turned and screwed into the thread portion 22, the flange portion 41 integrally formed with the fixed core 39 such that it is opposed to a stepped portion of the inner wall of the mounting hole 21, presses the gasket 24 against the stepped portion without the gasket 24 being rotated, thanks to a frictional force of the gasket 24. At this time, the corrugated portion of the pressed gasket 24 is crushed, whereby the flange portion 41 is brought into intimate contact with the stepped portion of the inner wall of mounting hole 21. When the coil assembly is screwed into the thread portion 22, the flange portion 41 and the inwardly extended portion of the yoke 50 slide against each other, whereby sliding surfaces thereof are scratched, but since the scratched portions are on the atmosphere side of the gasket 24 sealing against the atmosphere, no refrigerant leaks from the scratches.

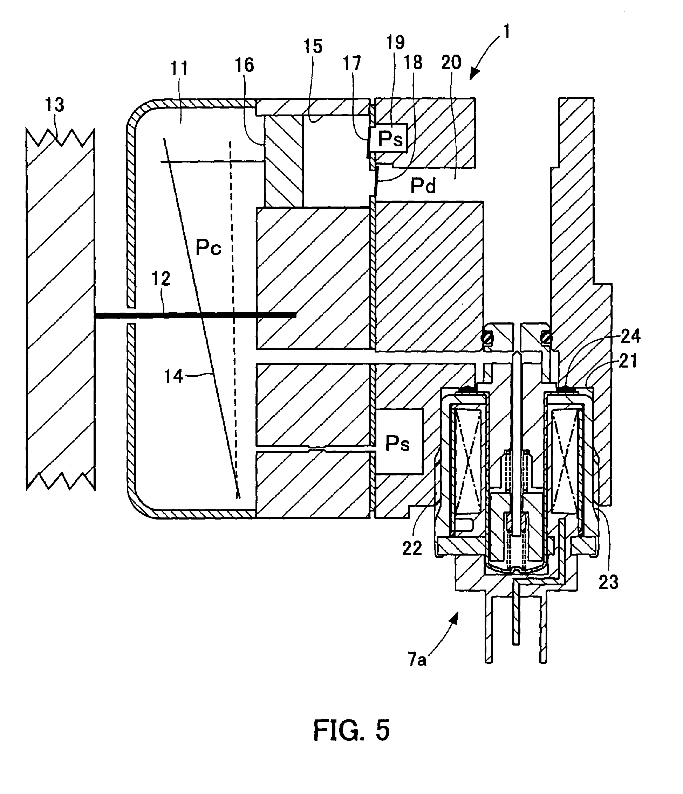

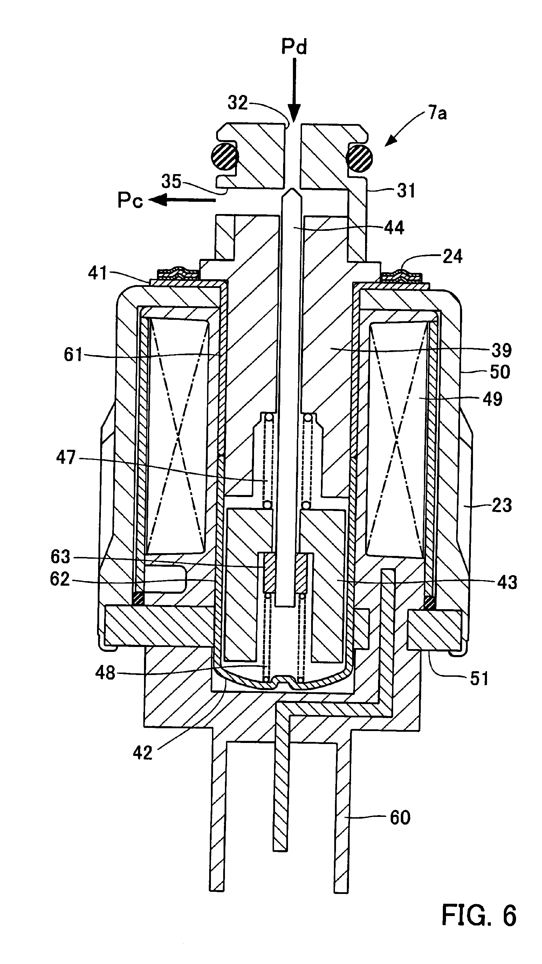

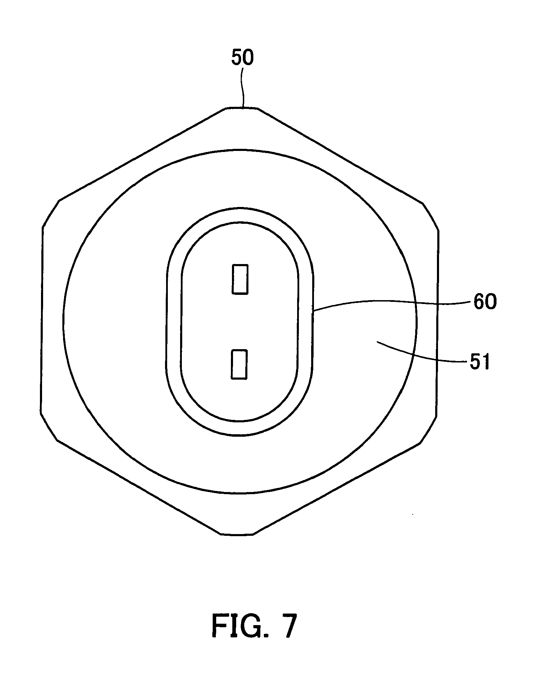

FIG. 5 is a view of another control valve in a state mounted in the compressor. FIG. 6 is a central longitudinal cross-sectional view of an example of the construction of the control valve for the compressor. FIG. 7 is a view of the control valve for the compressor as viewed from a direction in which the control valve is mounted. It should be noted that in FIGS. 5 to 7, component elements identical to those appearing in FIGS. 2 to 4 will be designated by identical reference numerals, and detailed description thereof is omitted.

As is distinct from the control valve 7 shown in FIGS. 2 to 4, which senses the differential pressure between discharge pressure Pd and the suction pressure Ps, and controls the pressure Pc in the crankcase 11 such that the differential pressure becomes equal to a differential pressure set by the solenoid, whereby the displacement of the compressor 1 is controlled to displacement corresponding to electric current externally supplied to the control valve, the control valve 7a shown in FIGS. 5 to 7 is a solenoid valve performing ON/OFF operation.

Therefore, when mounted in the compressor 1, the control valve 7a is interposed in the passage communicating between the discharge chambers 20 and the crankcase 11 to control the flow rate of refrigerant flowing from the discharge chambers 20 into the crankcase 11 by the ON/OFF operation.

Further, while the control valve 7 shown in FIGS. 2 to 4 is of a type in which the harness 52 is directly extended out, the control valve 7a is of a type in which a connector 60 is formed, whereby there is no twisting of the harness 52 when the control valve 7a is screwed into the compressor 1.

In the control valve 7a, the body 31, which includes the port 32 for introducing refrigerant at discharge pressure Pd, the port 35 for discharging the controlled pressure Pc into the crankcase 11, and a valve seat, is fitted on the fixed core 39 of the solenoid. Further, a sleeve 61 having the flange portion 41 and a bottomed sleeve 62 are fitted on the fixed core 39, and an open end of the sleeve 61 and an open end of the bottomed sleeve 62, opposed to the open end of the sleeve 61, are hermetically welded. Disposed in the bottomed sleeve 62 is the movable core 43 which is urged by the spring 47 in a direction away from the fixed core 39, and is urged by the spring 48 toward the fixed core 39 via a hollow cylindrical member 63. The hollow cylindrical member 63 is fixed to the shaft 44 which is loosely fitted in the fixed core 39 and the movable core 43 in a manner axially extending therethrough. An upper end, as viewed in FIG. 6, of the shaft 44 forms a valve element of the control valve 7a.

In the control valve 7a as well, a coil assembly is provided on the outer peripheries of the sleeve 61 and the bottomed sleeve 62, in a manner pivotally movable about the axis of the sleeve 61 and the bottomed sleeve 62, and the gasket 24 is disposed on the flange portion 41 integrally formed with the sleeve 61. The yoke 50 of the coil assembly has the thread portion 23 threadedly formed on the outer peripheral surface of a lower portion thereof, as viewed in FIG. 6. The outer periphery of a lower end, as viewed in FIG. 6, of the yoke 50 is formed to be hexagonal, as shown in FIG. 7.

In mounting the control valve 7a configured as above in the compressor 1, the control valve 7a is inserted into the mounting hole 21 of the compressor 1. Then, the coil assembly of the control valve 7a is turned and screwed into the thread portion 22 of the mounting hole 21, and further screwed into the thread portion 22 by using a tool, such as a spanner. When the coil assembly is turned and screwed into the thread portion 22, the sleeve 61 is pressed against the stepped portion in the mounting hole 21 without the sleeve 61 being rotated thanks to the frictional force of the gasket. At this time, the corrugated portion of the pressed gasket 24 is crushed, whereby the flange portion 41 is brought into intimate contact with the compressor 1. When the coil assembly is screwed into the thread portion 22, the flange portion 41 and the inwardly extended portion of the yoke 50 slide against each other, whereby sliding surfaces thereof are scratched, but since the scratched portions are on the atmosphere side of the gasket 24 sealing against the atmosphere, no refrigerant leaks from the scratches.

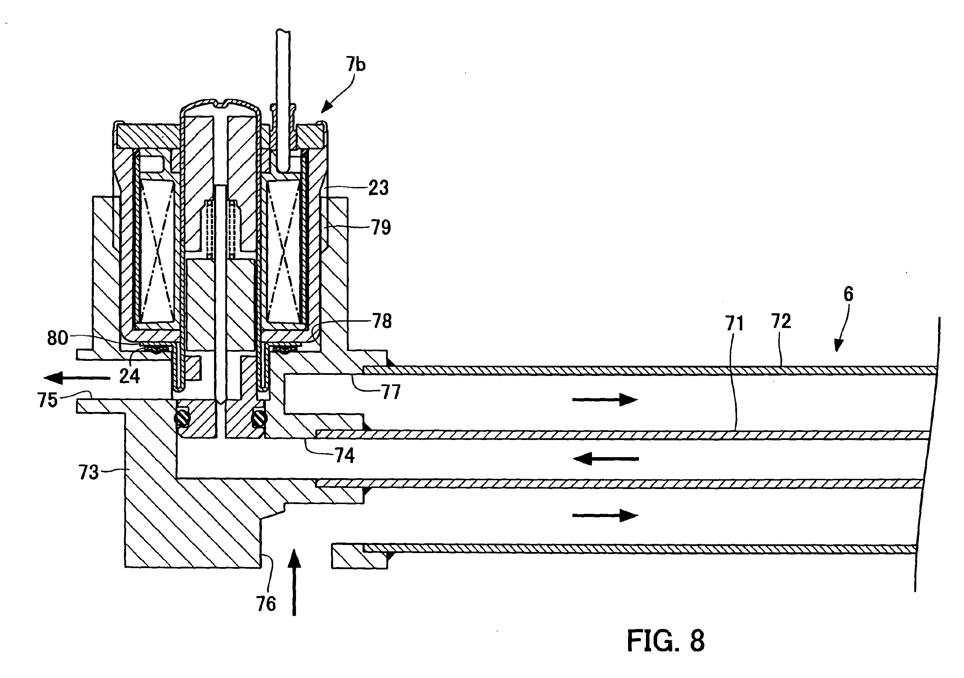

FIG. 8 is a view of a control valve as an expansion device in a mounted state thereof.

This example of mounting of the control valve shows a case in which a control valve 7b as an expansion device is mounted in the internal heat exchanger 6 as a component of a refrigeration cycle. The internal heat exchanger 6 has two tubes 71 and 72 different in diameter. The tubes 71 and 72 are arranged concentrically with each other by blocks 73 provided on opposite sides thereof (only one side of which is shown in FIG. 8). The inner tube 71 forms a passage through which high-temperature, high-pressure refrigerant from the gas cooler 2 flows, while the outer tube 72 forms a passage together with the inner tube 71, which passes low-temperature, low-pressure refrigerant from the accumulator 5. The inner tube 71 is made of a material having high thermal conductivity, for performing heat exchange between high-temperature, high-pressure refrigerant flowing inside, and low-temperature, low-pressure refrigerant flowing through outside.

The block 73 of the internal heat exchanger 6 includes a port 74 to which the inner tube 71 is brazed for introducing high-temperature, high-pressure refrigerant, a port 75 for discharging refrigerant adiabatically expanded by the control valve 7b into low-temperature, low-pressure refrigerant, a port 76 for introducing refrigerant from the accumulator 5, a port 77 to which the outer tube 72 is brazed for discharging refrigerant introduced into the port 76 to the passage between the tubes 71 and 72, and a mounting hole 78 for mounting the control valve 7b in the internal heat exchanger 6. A thread portion 79 is formed on an inner portion of the mounting hole 78 in the vicinity of an open end thereof.

Similarly to the FIG. 6 control valve 7a for a compressor, the control valve 7b is a solenoid valve performing ON/OFF operation. In the control valve 7b as well, a coil assembly is provided which can be pivotally moved about a sleeve accommodating a fixed core and a movable core, and the gasket 24 is disposed on a flange portion 80 integrally formed with the sleeve. A yoke of the coil assembly has the thread portion 23 threadedly formed thereon for mating with the thread portion 79 of the mounting hole 78, and the outer periphery of the yoke is formed to be hexagonal, although not shown.

In mounting the control valve 7b configured as above on the block 73 of the internal heat exchanger 6, the control valve 7b is inserted into the mounting hole 78 of the block 73. Then, the coil assembly of the control valve 7b is turned and screwed into the thread portion 79 of the mounting hole 78, and further screwed into the thread portion 79 by using a tool, such as a spanner. When the coil assembly is turned and screwed into the thread portion 79, the gasket 24 and the sleeve 61 are pressed, without being rotated, against a stepped portion in the mounting hole 78, by an inwardly extended portion of the yoke formed with the thread portion 23. Thus, the corrugated portion of the gasket 24 is crushed, and the gasket 24 is brought into intimate contact with the flange portion 80 and the block 73, whereby a valve section of the control valve 7b for performing adiabatic expansion is completely sealed from the atmosphere.

It should be noted that although in the above-described example of mounting of the control valve, a leaf spring is used as the gasket 24, a soft annular form of metal, such as copper, can be used in place of the leaf spring. In this case as well, when the control valve is screwed in, the soft metal is pressed by the flange portion and the stepped portion in the mounting hole, whereby the valve section of the control valve can be tightly sealed from the atmosphere.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

- 1: compressor
- 2: gas cooler
- 3: control valve
- 4: evaporator
- 5: accumulator
- 6: internal heat exchanger
- 7, 7a, 7b: control valve
- 11: crankcase
- 12: rotating shaft
- 13: pulley
- 14: wobble plate
- 15: cylinder
- 16: piston
- 17: suction relief valve
- 18: discharge relieve valve
- 19: suction chamber
- 20: discharge chamber
- 21: mounting hole
- 22, 23: thread portion
- 24: gasket
- 31: body
- 32: port
- 33: plug
- 34: strainer
- 35: port
- 36: shaft
- 37: port
- 38: spring
- 39: fixed core
- 40: fitting portion
- 41: flange portion
- 42: bottomed sleeve
- 43: movable core
- 44: shaft
- 45, 46: bearing member
- 47, 48: spring
- 49: coil
- 50: yoke
- 51: plate
- 52: harness
- 60: connector
- 61: sleeve
- 62: bottomed sleeve
- 63: hollow cylindrical member
- 71, 72: tube
- 73: block
- 74, 75, 76, 77: port
- 78: mounting hole
- 79: thread portion
- 80: flange portion

## Claims

1. A mounting structure for a control valve that is interposed in a refrigerant passage, thorough which refrigerant flows, in a refrigeration cycle for an automotive air conditioning system, for controlling a flow rate of refrigerant, **characterized in that**:
a mounting hole that has a stepped portion inside thereof which is opposed to a yoke surrounding a coil of a solenoid of the control valve in a direction of insertion of the control valve, and has a first thread portion in an inner portion toward an open end thereof, is provided at a location where the control valve is to be mounted;
the control valve is provided with a flange portion radially outwardly extended such that said flange portion is opposed to said stepped portion when the control valve is inserted into the mounting hole, a gasket disposed on a surface of said flange portion, opposed to said stepped portion, and said yoke disposed outside a fixed core and a movable core of said solenoid such that said yoke can be pivotally moved about an axis of said fixed core and said movable core, with one end thereof in the direction of insertion of the control valve being capable of being brought into contact with a surface of said flange portion opposite to the surface having said gasket disposed thereon, and the other end thereof having a second thread portion for mating with said first thread portion; and
the control valve is inserted into said mounting hole, and said yoke is screwed in, whereby said one end of said yoke presses said gasket against said stepped portion via said flange portion, thereby simultaneously achieving sealing of said stepped portion and mounting of the control valve.

2. The mounting structure as claimed in claim 1, **characterized in that** said gasket is a thin annular leaf spring having both surfaces thereof coated with rubber.

3. The mounting structure as claimed in claim 2, **characterized in that** said leaf spring has at least one ridge of corrugated portion in a circumferential direction.

4. The mounting structure as claimed in claim 1, **characterized in that** said gasket is soft metal having an annular shape.

5. The mounting structure as claimed in claim 1, **characterized in that** the control valve is a displacement control valve mounted in a compressor for controlling displacement of the compressor.

6. The mounting structure as claimed in claim 1, **characterized in that** the control valve is an expansion device mounted in an internal heat exchanger, for adiabatically expanding refrigerant having passed through said internal heat exchanger.

7. A solenoid-actuated control valve that is interposed in a refrigerant passage, through which refrigerant flows, in a refrigeration cycle for an automotive air conditioning system, for controlling a flow rate of refrigerant, **characterized by** comprising:
a flange portion integrally formed with a fixed core of a solenoid or with a sleeve accommodating said fixed core and a movable core, said flange portion being extended radially outward;
a gasket disposed on a surface of said flange portion on a side opposite from said solenoid; and
a yoke disposed outside said fixed core and said movable core such that said yoke can be pivotally moved about an axis thereof, with one end thereof in the direction of insertion of the control valve being capable of being brought into contact with a surface of said flange portion opposite to the surface having said gasket disposed thereon, and the other end thereof having a thread portion on a periphery thereof,
wherein the yoke is screwed into an insertion hole in which the control valve is to be mounted, whereby said one end of said yoke presses said gasket against a stepped portion formed inside the mounting hole via said flange portion, thereby simultaneously achieving sealing at said stepped portion and mounting of the control valve.
